# EUROPÄISCHE PATENTSCHRIFT

(11) **EP 0 799 760 B1**
(45) Veröffentlichungstag und Bekanntmachung des Hinweises auf die Patenterteilung: **09.08.2000**
(21) Anmeldenummer: 97103114.1
(22) Anmeldetag: 26.02.1997
(51) Int. Cl.: B62D 55/30

(54) **Vorrichtung zum Spannen und Abfedern des Leitrades in einem Kettenfahrwerk und Strassenfertiger**
Tensioning and shock-absorption device for the idler wheel in a track drive and road paver
Dispositif pour la tension et la suspension de la roue directrice dans un train de roulement et finisseur

(30) Priorität: 04.04.1996 DE 29606295 U
(43) Veröffentlichungstag der Anmeldung: 08.10.1997
(73) Patentinhaber: Joseph Vögele AG, D-68146 Mannheim (DE)
(72) Erfinder: Braun, Arthur Dipl.-Ing., 67146 Deidesheim (DE)
(74) Vertreter: Grünecker, Kinkeldey, Stockmair & Schwanhäusser Anwaltssozietät

(56) Entgegenhaltungen:
- CH-A- 362 326
- DE-A- 2 014 301
- DE-C- 456 065

## Beschreibung

Die Erfindung betrifft eine Vorrichtung der im Oberbegriff des Patentanspruchs 1 angegebenen Art sowie einen Straßenfertiger gemäß Oberbegriff des Patentanspruchs 14.

Eine aus DE 40 25 929 A1 bekannte Spann- und Federungs-Vorrichtung in einem Kettenfahrwerk enthält eine Schraubenfeder, die zwischen axialen Widerlagern angeordnet ist und durch die hydraulische Spannvorrichtung zwischen dem Leitrad und dem Laufwerksrahmen spannbar ist. Die Schraubenfeder liegt frei. Die hydraulische Spannvorrichtung weist einen innen in der Schraubenfeder zentral angeordneten Zylinder und als Spannkolben einen Stößel auf. Als Hydraulikmedium läßt sich zum Spannen der Feder Fett einpassen. Im Betrieb erfolgt die Kraftübertragung über den Fettvorrat in der hydraulischen Spannvorrichtung. Die Vorrichtung ist zwar in entspanntem Zustand transportier- und einbaubar, jedoch ergibt sich mit einer Schraubenfeder eine relativ hohe Betriebsgefahr. Außerdem ist die in dem zumeist begrenzten Einbauraum erzielbare, größtmögliche Federkraft begrenzt.

Aus WO87/00497 (DE 35 26 437.3) ist eine solche Vorrichtung bekannt, die aus einem mit Fett füllbaren Arbeitszylinder als Spannvorrichtung und einer in Reihe mit der Spannvorrichtung geschalteten Feder- und Dämpfungseinrichtung besteht, die einen elastomergefüllten Arbeitszylinder umfaßt, dessen Kolben in den Elastomer mit Umfangsspiel eintaucht. Derartige Vorrichtungen sind relativ teuer. Ihr Einsatzbereich ist bereits aufgrund eines temperaturabhängigen Arbeitsverhaltens begrenzt.

Bei aus DE-A-20 14 301 und CH-B-36 23 26 bekannten Kettenspann- und Federvorrichtungen für Gleiskettenfahrzeuge sind Spannfedern vorgesehen, die aus zwei gegensinnigen Tellerfederpakten bzw. aus einer Serie jeweils gegensinnig eingesetzter Belleville-Federringen bestehen.

Aus DE-C-456 065 ist ein Ringfederpakte für einen Schienenfahrzeug-Puffer bekannt, bei dem zum Erzielen einr anfänglichen weichen und dann stark zunehmenden Federung die axialen Abstände zwischen einigen äußeren oder inneren Federringen kleiner als die axialen Abstände zwischen den jeweils zugehörigen inneren und äußeren Federringen. Die dadurch erzielte Federkennlinie zeichnet sich durch einen flachen, weitgehend linearen Anstieg bis zu einem Knick ins Steile und darauffolgend einen steileren, linearen Anstieg bis zum Spitzenwert aus. Bei der Rückstellung fällt der Spitzenwert der Federkraft extrem steil bis auf eine geringe Rückstellkraft ab.

Straßenfertiger mit einem Kettenfahrwerk sind bekannt, z.B. aus dem Prospekt VÖGELE SUPER 1800, Nr. 2374/6/3.1992. Das Leitrad jedes Laufwerks wird von wenigstens einer vorgespannten Schraubenfeder beaufschlagt, um im Betrieb unterschiedliche Kettenspannungszustände und eine definierte Spannung der Kette zu gewährleisten bzw. um auftretende Belastungen durch sich zwischen die Lauf- bzw. Tragrollen setzende Steine, Lehm oder dgl. abzufangen.

Der Erfindung liegt die Aufgabe zugrunde, eine Vorrichtung der eingangs genannten Art sowie einen Straßenfertiger zu schaffen, die sich durch eine kostengünstige Abfederung des Leitrades mit größtmöglicher Federkraft auf kleinstem Einbauraum, Robustheit sowie Temperatur- und Schmutzunempfindlichkeit und gute Dämpfungseigenschaften bei stoßartig eingeleiteten Belastungen auszeichnen.

Die gestellte Aufgabe wird erfindungsgemäß mit den Merkmalen des Patentanspruchs 1 und des nebengeordneten Patentanspruchs 14 gelöst.

Ein Ringfeder-Paket (eingetragenes Warenzeichen der Firma Ringfeder GmbH, Krefeld-Uerdingen/DE) mit sich gegenseitig im Reibschluß expandierenden bzw. kontrahierenden Reibfedern erzeugt im Betrieb außerordentlich hohe Federkräfte bei extrem kleinem Einbauraum. Die Reibfedern sind robust, standfest und temperatur- und schmutzunempfindlich. Bei stoßartig eingeleiteten Belastungen zeigt das Ringfeder-Paket hervorragende Dämpfungseigenschaften. Ringfeder-Pakete sind in unterschiedlichen Größen, Leistungsbereichen und Spezifikationen kostengünstig erhältlich. Die Betriebssicherheit ist hoch. Die Vorrichtung läßt sich in ungespanntem Zustand transportieren und einbauen, und zwar ohne aufwendige Hilfseinrichtungen.

Eine sehr hohe Federkraft mit bedarfsabhängig einstellbarer Kennlinie für das Ein- und Ausfedern ist gemäß Anspruch 2 erzielbar.

Zwischen den Reibfedern vorgesehenes Schmierfett gemäß Anspruch 3 gewährleistet über lange Gebrauchsdauer ein gleichbleibendes Arbeitsverhalten.

Gemäß Anspruch 4 sind die hydraulischen Spannvorrichtung und das Ringfeder-Paket gemeinsam in einem geschlossenen Gehäuse untergebracht, was die Betriebssicherheit erhöht, die Gefahr einer Verschmutzung oder Beschädigung durch externe Einflüsse ausschließt und den Einbau vereinfacht. Das Ringfeder-Paket ist in ungespanntem Zustand mit einem Umfangsspiel im Gehäuse untergebracht, um den Reibfedern die Expansion im Betrieb zu gestatten.

Das Gehäuse hat gemäß Anspruch 5 eine Doppelfunktion, in dem es den Spannkolben führt und mit dem Spannkolben die Kammer begrenzt, die zum Spannen des Ringfeder-Pakets mit einem Hydraulikmedium, vorzugsweise Fett, befüllbar ist. Über die Endplatte und den Stößel stützt sich die Vorrichtung entweder am Leitrad oder am Laufwerksrahmen ab. Das andere Ende des Gehäuses stützt sich am Laufwerksrahmen bzw. Leitrad ab. Die Vorrichtung baut kompakt, und zwar sowohl in Längsrichtung als auch in Durchmesserrichtung.

Um ein Nachlassen der Spannwirkung zu vermeiden bzw. eine leichtgängige Bewegung des Spannkolbens sicherzustellen, ist gemäß Anspruch 6 wenigstens eine Abdichtung zwischen der Innenwand des Gehäuses und dem Spannkolben, z.B. ein Nutring im Spannkolben, vorgesehen.

Hinsichtlich der Kraftübertragung ist die Ausführungsform gemäß Anspruch 7 günstig.

Montagetechnisch ist es gemäß Anspruch 8 zweckmäßig, die Reibfedern in entspanntem Zustand über eine Schraubverbindung lose miteinander zu verbinden. Das Ringfeder-Paket läßt sich dann einfach ein- und ausbauen.

Alternativ sind einfach und gemäß Anspruch 9 die Reibfedern, der Spannkolben und die Endplatte nur lose in das Gehäuse eingesetzt. Diese Komponenten werden erst unter dem Spanndruck durch das eingefüllte Hydraulikmedium in Wirkungsverbindung gebracht.

Gemäß Anspruch 10 besteht das Gehäuse aus teleskopartig ineinandergesteckten Töpfen. Diese Ausführungsform zeichnet sich durch wenige Einzelteile aus.

Gemäß Anspruch 11 läßt sich Fett mit hohem Druck und exakt dosierbar einfüllen, und zur Demontage wieder ablassen.

Besonders vorteilhaft ist gemäß Anspruch 12 eine Überlastsicherung durch Druckbegrenzung mittels der Überdrucksicherungseinrichtung, z.B. mit einem einstellbaren Druckbegrenzungsventil. Dies vermeidet Schäden am Kettenfahrwerk bzw. in der Vorrichtung im Falle von unvorhersehbaren Überbelastungen.

Gemäß Anspruch 13 ist eine Steigerung der Federkraft durch wenigstens ein weiteres, parallel wirkendes und kleineres Ringfeder-Paket im Inneren des hauptsächlichen Ringfeder-Pakets gegeben. Es lassen sich mehr als zwei Ringfeder-Pakete ineinandersetzen. Es ist auch denkbar, ein Ringfeder-Paket mit einer innenliegenden Schraubenfeder zu kombinieren. Die Vorrichtung läßt sich sogar nachrüsten und für höhere Beanspruchungen auslegen, ohne größeren Einbauraum zu benötigen. Es wird gewinnbringend der Innenraum eines äußeren Ringfeder-Pakets für diesen Zweck genutzt.

Bei dem Straßenfertiger gemäß Anspruch 13 erbringt die Verwendung eines Ringfeder-Pakets größtmögliche Federkraft bei kleinstem Einbauraum, eine hohe Betriebssicherheit und günstige Robustheit mit langer Standzeit. Die Vorspannung läßt sich jederzeit ändern. Die Vorrichtung läßt sich in ungespanntem Zustand transportieren und einbauen und wird erst im Straßenfertiger gespannt. Bereits in Betrieb gewesene Straßenfertiger mit anderen Vorrichtungen lassen sich problemlos mit der neuen Vorrichtung nachrüsten. Die Vorrichtung ist weitgehend wartungsfrei und erbringt selbst bei den bei Straßenfertigern zumeist räumlich stark begrenzten Einbausituationen hohe Federkräfte und einen relativ großen nutzbaren Federungsweg.

Anhand der Zeichnungen werden Ausführungsformen des Erfindungsgegenstandes erläutert. Es zeigen:
- Fig. 1: eine schematische Seitenansicht eines Straßenfertigers mit einem Kettenfahrwerk,
- Fig. 2: ein Detail des Kettenfahrwerks,
- Fig. 3: eine Vorrichtung zum Spannen und Abfedern des Leitrades eines Kettenfahrwerks, und
- Fig. 4: schematisch eine geänderte Ausführungsform.

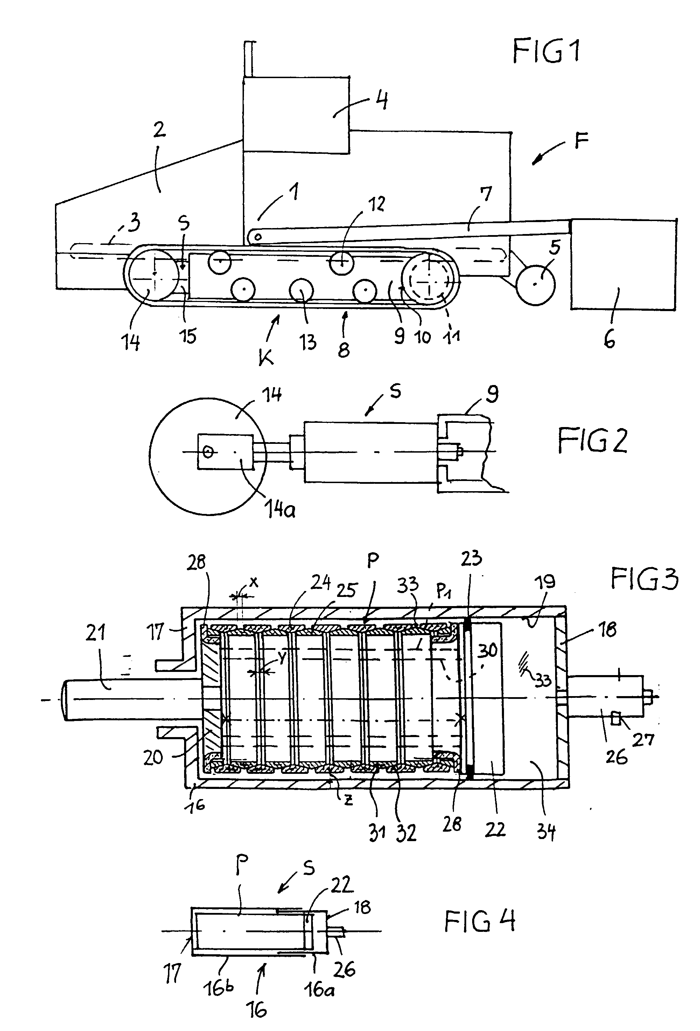

Ein Straßenfertiger F gemäß Fig. 1 weist einen Unterbau 1 auf, auf dem in Fahrtrichtung vorne ein Gutbunker 2, dahinter ein Primärantrieb 4 und am hinteren Ende eine Gut-Querverteileinrichtung 5 angeordnet sind. Vom Gutbunker 2 führt eine Längsfördervorrichtung 3 zur Querverteilvorrichtung 5. Über Ausleger 7 schleppt der Straßenfertiger eine Einbaubohle 6. Am Unterbau 1 ist ein Kettenfahrwerk K angeordnet, das beiderseitige Kettenlaufwerke 8 besitzt, deren jedes einen Laufwerksrahmen 9 mit einem Antriebsrad 10, getrieben über ein vom Primäraggregat 4 getriebenes Getriebe 11, Laufrollen 13, Tragrollen 12 und ein Leitrad 14 in einer Leitradeinheit 15 aufweist. Die Leitradeinheit 15 umfaßt eine Vorrichtung S zum Abfedern und Spannen des Leitrades 14, um die Kette 34 des Laufwerks 8 im Betrieb gespannt zu halten.

In Fig. 2 ist die Vorrichtung S zum Abfedern und Spannen des Leitrades 14 zwischen dem Leitrad 14 und dem Laufwerksrahmen 9 eingeordnet. Die Vorrichtung S stützt sich einerseits an einem Tragteil 14a des Leitrades 14 und andererseits an Rahmenteilen des Laufwerksrahmens 9 ab.

Eine Ausführungsform der Vorrichtung S ist in Fig. 3 in einem Längsschnitt gezeigt. In einem geschlossenen Gehäuse 16 mit Endwänden 17 und 18 bildet die Innenwand des Gehäuses einen Zylinder 19 für einen Spannkolben 22, der mit einer Dichtung 23, z.B. einem Nutring, abgedichtet verschieblich axial geführt ist und in dem Gehäuse 16 eine Kammer 34 begrenzt, die über ein Füllventil 26 mit einem im wesentlichen nichtkompressiblen Hydraulikmedium, z.B. Fett 33, füllbar ist. Die Kammer 34 ist mit einer Überlastsicherungseinrichtung 27, z.B. einem Druckbegrenzungsventil, ausgestattet, das zweckmäßigerweise baulich mit dem Füllventil 26 vereinigt ist. Das Füllventil 26 ist an der Gehäuseendwand 18 angebracht. Bei der anderen Gehäuseendwand 17 ist innenliegend eine Endplatte 20 vorgesehen, in der ein Stößel 21 zentrisch angeordnet ist, der die Endwand 17 durchsetzt und mit Überstand aus dem Gehäuse 16 vorsteht. Zwischen der Endplatte 20 und dem Spannkolben 22 ist ein Ringfeder-Paket P aus einer Vielzahl von ringförmigen Reibfedern 24, 25 als aktives Federelement eingesetzt. Bei der gezeigten Ausführungsform sind zur Gehäuseachse koaxiale, in etwa gleich große, kreisförmige äußere Reibfedern 24 mit axialen Zwischenabständen x hintereinandergereiht. Innen in den äußeren Reibfedern 24 sitzen ebenfalls ringförmige und gegenseitig mit einem Maß y beabstandete Reibfedern 25. Die Reibfedern 24, 25 sind annähernd dachförmig profiliert, wie bei 31 bzw. 32 angedeutet ist, und greifen mit ihren Profilierungen form- und kraftschlüssig ineinander. Zwischen den Reibfedern 24, 25 ist Schmierfett 33 vorgesehen. Vordere und hintere Endteile 28 mit ringförmiger Gestalt schließen das Ringfeder-Paket P ab. Die Anordnung der Reibfedern 24, 25 ist derart gewählt, daß jeweils zwei äußere beabstandete Reibfedern 24 auf einer inneren Reibfeder 25 aufliegen. Die Reibfedern 24, 25 sind entweder in Umfangsrichtung geschlossen oder mit einer (nicht-gezeigten) Unterbrechung ausgebildet. In dem Ringfeder-Paket können Reibfedern 24, 25 unterschiedlich großer Querschnitte und Federeigenschaften wahlweise miteinander kombiniert sein. Die Profilierung der Reibfedern kann auch ballig sein. Ferner könnten auch drei (mit einer Mittelreihe und einer äußeren und einer inneren Reihe) oder mehrere ineinandergesetzte Reihen von Reibfedern vorgesehen sein, wobei dann zwischen inneren und äußeren Reihen liegende Reibfedern innen und außen profiliert wären. Zur Einstellung der Federkennlinie könnten die Axialabstände der Reibfeder über die Federlänge varrieren.

Strichliert ist angedeutet, daß im Inneren des Reibfeder-Pakets P wenigstens ein weiteres Reibfeder-Paket P1 zwischen der Endplatte 20 und dem Spannkolben 22 vorgesehen sein kann, das mit dem anderen Paket zusammenwirkt. Denkbar ist ferner, innen im Ringfeder-Paket P einen hydraulischen Feder/Dämpfer-Einsatz 30 unterzubringen. Die Reibfedern 24, 25 können durch eine strichpunktiert angedeutete Schraubverbindung zu dem Paket vereinigt sein. Es ist aber auch denkbar, sämtliche Komponenten nur lose in das Gehäuse 16 einzusetzen. Bei entspanntem Ringfeder-Paket sollte dieses gegenüber der Innenwand des Gehäuses 16 ein radiales Spiel z haben.

Beim Transport und vor dem Einbau ist die Kammer 34 leer. Die Vorrichtung S wird zwischen das Leitrad 14 und den Laufwerksrahmen 9 eingesetzt. Dann wird die Kammer 34 mit Fett gefüllt, bis das Ringfeder-Paket P in axialer Richtung ausreichend vorgespannt ist. Die Fettbefüllung wird im Betrieb als Widerlager bei der Kraftübertragung verwendet. Durch weiteres Nachfüllen von Fett oder Entnehmen von Fett kann die Vorspannung variiert werden.

Fig. 4 unterscheidet sich von Fig. 3 dadurch, daß das Gehäuse 16 aus zwei teleskopartig ineinandergesetzten, einendig offenen Töpfen 16a und 16b besteht, die relativ zueinander verschiebbar sind und das Ringfeder-Paket P und den Spannkolben 22 aufnehmen. Am das Gehäuseende 18 bildenden Topfboden des Topfes 16a ist das Füllventil 26 angebracht. Der das Gehäuseende 17 bildende Topfboden kann direkt zur Kraftübertragung verwendet werden. Das Ringfeder-Paket P kann sich ohne Endplatte 20 direkt am Topfboden 17 abstützen, um Baulänge zu sparen. Gegebenenfalls könnte die beiden Töpfe 16a, 16b im Teleskopierbereich ein Faltenbalg umfassen.

## Patentansprüche

1. Vorrichtung (S) zum Spannen und Abfedern des Leitrades (14) in einem Kettenfahrwerk (K), insbesondere in einer Baumaschine wie einem Straßenfertiger, mit einem Metallfederelement und einer koaxialen hydraulischen Spanneinrichtung, die zwischen dem Leitrad (14) und einem Laufwerksrahmen (9) angeordnet sind und das Leitrad (14) gegenüber dem Laufwerksrahmen (9) abstützen, **dadurch gekennzeichnet**, daß das Metallfederelement wenigstens ein Ringfeder-Paket (P, P1) aus koaxial angeordneten, ringförmigen Reibfedern (24, 25) aufweist.

2. Vorrichtung nach Anspruch 1, **dadurch gekennzeichnet**, daß in dem Paket (P, P1) gegenseitig beabstandete äußere und gegenseitig beabstandete innere, und im Querschnitt in etwa dach- oder V-förmig profilierte Reibfedern (24, 25) abwechselnd in zwei oder mehr Reihen aufgereiht sind, derart, daß jeweils benachbarte äußere Reibfedern (24) außen auf einer inneren Reibfeder (25) aufliegen bzw. benachbarte innere Reibfedern (25) innen an einer äußeren Reibfeder (24) anliegen.

3. Vorrichtung nach Anspruch 1 oder 2, **dadurch gekennzeichnet**, daß zwischen den Reibfedern (24, 25) Schmierfett (33) vorgesehen ist.

4. Vorrichtung nach wenigstens einem der Ansprüche 1 bis 3, **dadurch gekennzeichnet**, daß ein gemeinsames, vorzugsweise geschlossenes, Gehäuse (16) vorgesehen ist, in dem die hydraulische Spanneinrichtung und das wenigstens eine Ringfeder-Paket (P), vorzugsweise mit Umfangsspiel (z), hintereinander angeordnet sind.

5. Vorrichtung nach Anspruch 4, **dadurch gekennzeichnet**, daß das Gehäuse (16) als Zylinder (19) eines an einem Ende des Ringfeder-Pakets (P, P1) angreifenden Spannkolbens (22) ausgebildet ist, daß der Spannkolben (22) im Zylinder (19) eine über ein Füllventil (26) mit einem Hydraulikmedium, vorzugsweise Schmierfett (33), befüllbare Kammer (34) begrenzt, und daß am gegenüberliegenden Ende des Ringfeder-Pakets (P, P1) eine Endplatte (20) angeordnet ist, von der ein eine Gehäuseendwand (17) durchdringender Stößel (21) nach außen führt.

6. Vorrichtung nach Anspruch 5, **dadurch gekennzeichnet**, daß der Spannkolben (22) wenigstens eine Abdichtung (23) zur Innenwand des Gehäuses (16), z.B. einen Nutring, aufweist.

7. Vorrichtung nach Anspruch 5, **dadurch gekennzeichnet**, daß der Stößel (21) in der Endplatte (20) festgelegt ist.

8. Vorrichtung nach Anspruch 5, **dadurch gekennzeichnet**, daß die Reibfedern (24, 25) des Ringfeder-Pakets (P, P1) in entspanntem Zustand über eine Schraubverbindung (30) lose miteinander verbunden sind.

9. Vorrichtung nach Anspruch 5, **dadurch gekennzeichnet**, daß die Reibfedern (24, 25) des Ringfeder-Pakets (P, P1), der Spannkolben (22) und die Endplatte (20) lose in das Gehäuse (16) eingesetzt sind.

10. Vorrichtung nach Anspruch 5, **dadurch gekennzeichnet**, daß das Gehäuse (16) aus zwei teleskopartig ineinandergesteckten, einendig offenen Töpfen (16a, 16b) besteht, dessen einer (16a) den Zylinder für den Spannkolben (22) und dessen anderer (16b) mit seinem Topfboden (17) eine Endplatte bildet.

11. Vorrichtung nach Anspruch 5, **dadurch gekennzeichnet**, daß das Füllventil (26) ein Fett-Füllventil ist.

12. Vorrichtung nach Anspruch 5, **dadurch gekennzeichnet**, daß die Kammer (34), vorzugsweise vereinigt mit dem Füllventil (26), eine Überdrucksicherungseinrichtung (27) aufweist, über die im Falle eines vorbestimmten Überdrucks in der Kammer Hydraulikmedium nach außen verdrängbar ist.

13. Vorrichtung nach Anspruch 5, **dadurch gekennzeichnet**, daß in dem Ringfeder-Paket (P) zwischen dem Spannkolben (22) und der Endplatte (20) wenigstens ein weiteres Ringfeder-Paket (P1) mit kleinerem Außendurchmesser angeordnet ist.

14. Straßenfertiger (F) mit einem Kettenfahrwerk (K), das an einem einem Gutbunker (2), eine Längsfördervorrichtung (3), einen Sekundärantriebe (11) treibenden Primärantrieb (4) und eine Gut-Querverteileinrichtung (5) aufweisenden Unterbau (1) angeordnet ist und beidseitige Kettenlaufwerke (8) aufweist, deren jedes einen Laufwerksrahmen (9) mit die Kette (34) abstützenden Laufrollen (13), einem Antriebsrad (10) für die Kette und einem die Kette spannenden, in einer Leitradeinheit (15) angeordneten Leitrad (14) aufweist, und mit einer in der Leitradeinheit (15) vorgesehenen, sich am Laufwerksrahmen (9) abstützenden Vorrichtung zum Spannen der Kette und Abfedern des Leitrads, die in Spannrichtung koaxial hintereinander geschaltet ein Metallfederelement und eine hydraulische Spannvorrichtung enthält, **dadurch gekennzeichnet**, daß das Metallfederelement wenigstens ein Ringfeder-Paket (P, P1) aus koaxial angeordneten, ringförmigen und im Querschnitt in etwa dach- oder V-förmig profilierten Reibfedern (24, 25) aufweist, und daß in dem Paket (P, P1) gegenseitig beabstandete äußere und gegenseitig beabstandete innere Reibfedern (24, 25) abwechselnd und in mindestens zwei Reihen aufgereiht sind.

## Claims

1. A device (S) for tensioning and spring-suspending the guide wheel (14) in a tracked running gear (K), particularly in a building machine such as a road finisher, comprising a metal spring element and a coaxial hydraulic tensioning device disposed between the guide wheel (14) and a running-gear frame (9) and bracing the guide wheel (14) against the running-gear frame (9), characterised in that the metal spring element comprises at least one stack (P, P1) of coaxially disposed annular friction springs (24, 25).

2. A device according to claim 1, characterised in that spaced-apart outer and spaced-apart inner friction springs (24, 25) having approximately roof-shaped or V-shaped profiled cross-sections are arranged alternately in two or more rows in the stack (P, P1), such that neighbouring outer friction springs (24) bear externally on an inner friction spring (25) or neighbouring inner friction springs (25) bear internally on an outer friction spring (24).

3. A device according to claim 1 or 2, characterised in that lubricating grease (33) is provided between the friction springs (24, 25).

4. A device according to at least one of claims 1 to 3, characterised in that a common, preferably closed, casing (16) is provided and the hydraulic tensioning device and the at least one annular spring stack (P) are disposed one behind the other, preferably with peripheral clearance (z), in the casing (16).

5. A device according to claim 4, characterised in that the casing (16) is in the form of a cylinder (19) of a tensioning piston (22) engaging one end of the annular spring stack (P, P1), in that the tensioning spring (22) in the cylinder (19) bounds a chamber (34) fillable with a hydraulic medium, preferably lubricating grease (33), through a filling valve (26), and in that an end plate (20) is disposed at the opposite end of the annular spring stack (P, P1) and a push rod (21) extending through an end wall (17) of the casing projects outwardly from the end plate (20).

6. A device according to claim 5, characterised in that the tensioning piston (22) has at least one seal (23), e.g. a grooved ring, in relation to the inner wall of the casing (16).

7. A device according to claim 5, characterised in that the push rod (21) is fastened in the end plate (20).

8. A device according to claim 5, characterised in that the friction springs (24, 25) in the stack (P, P1) are loosely connected by a screw connection (30) in the unstressed state.

9. A device according to claim 5, characterised in that the friction springs (24, 25) in the stack (P, P1), the tensioning piston (22) and the end plate (20) are loosely inserted in the casing (16).

10. A device according to claim 5, characterised in that the casing (16) comprises two telescopically engaging pots (16a, 16b) open at one end, one pot (16a) constituting the cylinder for the tensioning piston (22) and the bottom (17) of the other pot (16a) forming an end plate.

11. A device according to claim 5, characterised in that the filling valve (26) is for filling with grease.

12. A device according to claim 5, characterised in that the chamber (34), preferably combined with the filling valve (26), comprises an anti-excess pressure device (27) for expelling hydraulic medium to the exterior in the event of a predetermined excess pressure in the chamber.

13. A device according to claim 5, characterised in that at least one additional annular spring stack (P1) having a smaller outer diameter is disposed in the stack (P) between the tensioning piston (22) and the end plate (20).

14. A road finisher (F) comprising a tracked running gear (K) disposed on a substructure (1) comprising a bunker (2) for material, a longitudinal conveyor (3), a primary drive (4) driving secondary drives (11) and a transverse distributor (5) for material and having tracked running gears (8) on each side, each running gear comprising tread rollers bracing a running-gear frame against the track (34), a drive wheel (10) for the track and a guide wheel (14) disposed in a guide-wheel unit (15) and tensioning the track, and a device provided in the guide-wheel unit (15) and bracing the running-gear frame (9) so as to tension the track and spring-suspend the guide wheel, the device containing a metal spring element and a hydraulic tensioning device connected coaxially one behind the other in the tensioning direction, characterised in that the metal spring element comprises at least one stack (P, P1) of coaxially disposed annular friction springs (24, 25) having approximately roof-shaped or V-shaped profiled cross-sections, and in that spaced-apart outer and spaced-apart inner friction springs (24, 25) are disposed alternately in at least two rows in the stack (P, P1).

## Revendications

1. Dispositif (S) pour la tension et la suspension de la roue directrice (14) dans un train à chenille (K), en particulier dans un engin de chantier tel qu'un finisseur, avec un élément à ressort métallique et un dispositif de tension hydraulique coaxial, qui sont disposés entre la roue directrice (14) et un cadre de mécanisme de roulement (9) et soutiennent la roue directrice (14) par rapport au cadre de mécanisme de roulement (9), caractérisé en ce que l'élément à ressort métallique présente au moins un paquet d'anneaux-ressorts (P, P1) formé de ressorts de friction (24, 25) annulaires disposés coaxialement.

2. Dispositif selon la revendication 1, caractérisé en ce que, dans le paquet (P, P1), des ressorts de friction (24, 25) extérieurs mutuellement espacés, et intérieurs mutuellement espacés, et présentant un profil, en coupe transversale sensiblement en forme de toit ou en forme de V, sont alignés alternativement sur deux rangées ou plus, de telle sorte que des ressorts de friction (24) extérieurs voisins reposent chaque fois extérieurement sur un ressort de friction (25) intérieur et que des ressorts de friction (25) intérieurs voisins reposent chaque fois intérieurement sur un ressort de friction (24) extérieur.

3. Dispositif selon la revendication 1 ou 2, caractérisé en ce que de la graisse lubrifiante (33) est prévue entre les ressorts de friction (24, 25).

4. Dispositif selon au moins une des revendications 1 à 3, caractérisé en ce qu'il est prévu un boîtier (16) commun, de préférence fermé dans lequel sont disposés l'un derrière l'autre le dispositif de tension hydraulique et le paquet d'anneaux-ressorts (P), au nombre d'au moins un, de préférence avec un jeu périphérique (z).

5. Dispositif selon la revendication 4, caractérisé en ce que le boîtier (16) est réalisé sous forme de cylindre (19) d'un piston de tension (22) agissant à une extrémité du paquet d'anneaux-ressorts (P, P1), que le piston de tension (22) délimite dans le cylindre (19) une chambre (34) pouvant être remplie par l'intermédiaire d'une soupape de remplissage (26) avec un fluide hydraulique, de préférence de la graisse lubrifiante (33), et qu'une plaque terminale (20) est disposée à l'extrémité opposée du paquet d'anneaux-ressorts (P, P1), plaque de laquelle part vers l'extérieur un poussoir (21) traversant une paroi terminale de boîtier (17).

6. Dispositif selon la revendication 5, caractérisé en ce que le piston de tension (22) présente au moins un dispositif d'étanchéité (23) par rapport à la paroi intérieure du boîtier (16), par exemple un anneau à lèvres.

7. Dispositif selon la revendication 5, caractérisé en ce que le poussoir (21) est fixé dans la plaque terminale (20).

8. Dispositif selon la revendication 5, caractérisé en ce que les ressorts de friction (24, 25) du paquet d'anneaux-ressorts (P, P1), à l'état détendu, sont reliés entre eux de manière lâche par un assemblage vissé (30).

9. Dispositif selon la revendication 5, caractérisé en ce que les ressorts de friction (24, 25) du paquet d'anneaux-ressorts (P, P1), le piston de tension (22) et la plaque terminale (20) sont mis en place de manière lâche dans le boîtier (16).

10. Dispositif selon la revendication 5, caractérisé en ce que le boîtier (16) est formé de deux pots (16a, 16b) ouverts à une extrémité et insérés l'un dans l'autre de manière télescopique, dont l'un (16a) forme le cylindre pour le piston de tension (22) et dont l'autre (16b) forme avec son fond (17) une plaque terminale.

11. Dispositif selon la revendication 5, caractérisé en ce que la soupape de remplissage (26) est une soupape de remplissage de graisse.

12. Dispositif selon la revendication 5, caractérisé en ce que la chambre (34) présente, de préférence réuni avec la soupape de remplissage (26), un dispositif de protection contre les surpressions (27) par l'intermédiaire duquel on peut, en présence d'une surpression prédéterminée dans la chambre, expulser vers l'extérieur du fluide hydraulique.

13. Dispositif selon la revendication 5, caractérisé en ce que au moins un paquet d'anneaux-ressorts (P1) supplémentaire d'un diamètre extérieur plus petit est disposé dans le paquet d'anneaux-ressorts (P), entre le piston de tension (22) et la plaque terminale (20).

14. Finisseur (F) avec un train à chenille (K) qui est disposé sur un châssis (1) comportant une trémie de stockage (2), un dispositif de transport longitudinal (3), un entraînement primaire (4) entraînant des entraînements secondaires (11) et un dispositif de distribution latérale de matériau (5) et qui présente des mécanismes de roulement de chenille (8) bilatéraux qui comportent chacun un cadre de mécanisme de roulement (9) avec des galets de roulement (13) supportant la chenille (34), une roue d'entraînement (10) pour la chenille et une roue directrice (14) tendant la chenille et disposée dans une unité de roue directrice (15), et avec un dispositif prévu dans l'unité de roue directrice (15) et prenant appui sur le cadre de mécanisme de roulement (9) pour la tension de la chenille et la suspension de la roue directrice, lequel dispositif contient un élément à ressort métallique et un dispositif de tension hydraulique montés l'un derrière l'autre coaxialement dans la direction de tension, caractérisé en ce que l'élément à ressort métallique présente au moins un paquet d'anneaux-ressorts (P, P1) formé de ressorts de friction (24, 25) annulaires disposés coaxialement et présentant un profil, en coupe transversale sensiblement en forme de toit ou en forme de V, et que dans le paquet (P, P1), des ressorts de friction (24, 25) extérieurs mutuellement espacés et intérieurs mutuellement espacés sont alignés alternativement et sur au moins deux rangées.
